Europäisches Patentamt

European Patent Office

Office européen des brevets

(19)

(11)     **EP 1 226 466 B1**

(12)           **EUROPÄISCHE PATENTSCHRIFT**

(45) Veröffentlichungstag und Bekanntmachung des
Hinweises auf die Patenterteilung:
**23.04.2003   Patentblatt 2003/17**

(21) Anmeldenummer: **00971269.6**

(22) Anmeldetag: **02.10.2000**

(51) Int Cl.[7]: **G02F 1/09**, G02B 6/26

(86) Internationale Anmeldenummer:
**PCT/DE00/03461**

(87) Internationale Veröffentlichungsnummer:
**WO 01/023949 (05.04.2001 Gazette 2001/14)**

(54) **LICHTWELLENLEITER UND FASEROPTISCHER ISOLATOR**

OPTICAL WAVE GUIDE AND FIBER OPTIC INSULATOR

GUIDE D'ONDES OPTIQUES ET ISOLATEUR A FIBRES OPTIQUES

(84) Benannte Vertragsstaaten:
**FR GB IT**

(30) Priorität: **30.09.1999  DE 19947033**

(43) Veröffentlichungstag der Anmeldung:
**31.07.2002   Patentblatt 2002/31**

(73) Patentinhaber: **SCC Special Communication
Cables GmbH & Co. KG
80379 München (DE)**

(72) Erfinder: **DEUTSCH, Bernhard
D-81477 München (DE)**

(74) Vertreter: **Viering, Jentschura & Partner
Postfach 22 14 43
80504 München (DE)**

(56) Entgegenhaltungen:
EP-A- 0 227 366          US-A- 4 371 838
US-A- 4 726 652          US-A- 5 479 551

- PATENT ABSTRACTS OF JAPAN vol. 1998, no.
  03, 27. Februar 1998 (1998-02-27) & JP 09 292528
  A (KYOCERA CORP), 11. November 1997
  (1997-11-11)
- KAZUO SHIRAISHI ET AL: "FIBER-EMBEDDED
  IN-LINE ISOLATOR" JOURNAL OF LIGHTWAVE
  TECHNOLOGY,US,IEEE. NEW YORK, Bd. 9, Nr.
  4, 1. April 1991 (1991-04-01), Seiten 430-435,
  XP000205030 ISSN: 0733-8724
- PATENT ABSTRACTS OF JAPAN vol. 1995, no.
  06, 31. Juli 1995 (1995-07-31) & JP 07 064023 A
  (KYOCERA CORP), 10. März 1995 (1995-03-10)
- WANG W ET AL: "ANALYSIS OF
  MAGNETO-OPTIC NONRECIPROCAL PHASE
  SHIFT IN ASYMMETRIC FIBERS FOR ALL-FIBER
  ISOLATORS BY VARIATIONAL VECTOR-WAVE
  MODE- MATCHING METHOD" JOURNAL OF
  LIGHTWAVE TECHNOLOGY,US,IEEE. NEW
  YORK, Bd. 14, Nr. 5, 1. Mai 1996 (1996-05-01),
  Seiten 749-759, XP000598729 ISSN: 0733-8724
- PATENT ABSTRACTS OF JAPAN vol. 018, no.
  241 (P-1733), 9. Mai 1994 (1994-05-09) & JP 06
  027356 A (FUJIKURA LTD), 4. Februar 1994
  (1994-02-04)

**Beschreibung**

Die Erfindung betrifft einen Lichtwellenleiter und einen den Wellenleiter enthaltenden faseroptischen Isolator.

Optische Faserbauteile und Sensoren gewinnen bei der Übertragung und Verarbeitung von Signalen in optischen Kommunikationssystemen und vielen optischen Faservorrichtungen/-systemen zunehmend an Bedeutung. Optische Faservorrichtungen/-systeme enthalten üblicherweise mindestens eine lichtübertragende optischen Faser (Lichtwellenleiter, Glasfaser), eine signalverarbeitende Komponente und/oder einen Sensor sowie eine kohärente Strahlung emittierende Quelle (Laser bzw. Laserdiode).

Bei der Übertragung der Signale über sehr lange Strecken, beispielsweise bei einer interkontinentalen Übertragung, ist es erforderlich, das optische Signal in regelmäßigen Abständen zu verstärken.

Bei den meisten optischen Fasersystemen ist sicherzustellen, daß Lichtsignale nicht in die Laserlichtquelle oder die optischen Verstärker zurückgestreut werden, da dies zu unerwünschten Oszillationen führen kann. Außerdem erhöht das zurückgestreute Licht den Rauschpegel im System.

Zur Lösung dieses Problems werden Isolatoren in optische Fasersysteme und optische Verstärker eingebaut. Diese gewährleisten, daß Licht nur in eine Richtung übertragen, die Ausbreitung in entgegengesetzter Richtung hingegen weitgehend unterbunden wird.

Ein häufig verwendeter optischer Isolator ist der sogenannte "Bulk"-Isolator. Zwischen zwei Polarisatorn, deren Polarisationsrichtungen einen Winkel von 45° einschließen, ist hier ein einem äußeren Magnetfeld ausgesetzter magnetooptischer Kristall angeordnet. Aufgrund des magnetooptischen Effekts (Faraday-Effekt) wird die Polarisationsebene des einfallenden Lichts, unabhängig von deren anfänglicher Orientierung, um 45° gedreht. Das einfallende, linear polarisierte Licht durchläuft somit den die Polarisationsebene um 45° drehenden ersten Polarisator, so daß es den zweiten Polarisator ungeschwächt durchlaufen kann. Die Polarisationsebene des zum zweiten Polarisator gelangenden zurückgestreuten Lichts, wird ebenfalls um 45° gedreht, ist damit um 90° gegenüber der Polarisationsrichtung des ersten Polarisators verschoben und kann diesen nicht passieren.

Ebenfalls bekannt ist die Verwendung eines magnetooptischen Films anstelle eines magnetooptischen Kristalls.

Neben diesen "Bulk"-Isolatoren kommen auch sogenannte "All-Fibre"-Isolatoren zum Einsatz (siehe beispielsweise US-A-5,479,542) Obwohl bei diesem Isolatortyp der magnetooptische Effekt in der Glasfaser ausgenutzt wird, ist eine zusätzliche Vorrichtung zur Erzeugung eines äußeren Magnetfelds erforderlich. Dies hat den Nachteil, daß die optischen Bauteile vergleichsweise groß sind und nicht in das Kabel eingebaut werden können. Darüber hinaus sind die genannten Isolatoren äußerst Temperatur- oder Feuchtigkeitsempfindlich. Sie müssen daher vor Umwelteinflüssen geschützt in einem geschlossenen Behältnis, beispielsweise einer Muffe, angeordnet werden. Bei bestimmten Netzinfrastrukturen, wie Seekabel- oder Luftkabelnetzen ist dies aber entweder nicht oder nur mit großem Aufwand möglich.

Aufgabe der Erfindung ist es daher, einen als Polarisationsdreher dienenden und in ein Lichtwellenleitersystem integrierbaren Lichtwellenleiter zu schaffen.

Eine weitere Aufgabe der Erfindung ist es, einen faseroptischen Isolator bereitzustellen, der die vorangehend erwähnten Nachteile vermeidet.

Erfindungsgemäß wird die Aufgabe durch einen Lichtwellenleiter nach Anspruch 1 und durch einen optischen Isolator nach Anspruch 5 gelöst. Die Unteransprüche betreffen weitere vorteilhafte Aspekte der Erfindung.

Der erfindungsgemäße Lichtwellenleiter enthält einen Kern, dessen Material einen hinreichend großen Faraday-Effekt aufweist, sowie eine magnetische oder magnetisierbare äußere Beschichtung, welche im Kern ein den Faraday-Effekt hervorrufendes permanentes Magnetfeld erzeugt. Ein derartiger Wellenleiter kann in gängige Wellenleitersysteme integriert und mit anderen Lichtwellenleitern (Glasfasern, LWL-Adern, LWL-Faserbändchen usw.) leicht verbunden, insbesondere verspleißt werden.

Entsprechend einem erfindungsgemäßen Aspekt ist die äußere Beschichtung durch zwei Halbschalen gebildet, wobei eine Halbschale den magnetischen Südpol und die andere Halbschale den magnetischen Nordpol bildet. Das von den Halbschalen erzeugte Magnetfeld kann hierbei relativ schwach sein, sofern man die Wirklänge, also die Länge der den Faserkern konzentrisch umhüllenden Halbschalen entsprechend groß, beispielsweise 10 m, wählt.

Als besonders vorteilhaft hat sich erwiesen, den üblicherweise aus Quarzglas bestehenden Faserkern mit YIG-Material zu dotieren, das einen hinreichend großen Faraday-Effekt zeigt.

Vorzugsweise wird der erfindungsgemäße Lichtwellenleiter als Einzel-Wellenleiter verwendet.

Der erfindungsgemäße optische Isolator ist ein faseroptischer Isolator mit zumindest einem Polarisationssteller und einem Polarisationsdreher mit einem Lichtwellenleiter, der einen Kern, der einen hinreichend großen Faraday-Effekt aufweist, und der eine äußere Beschichtung hat. Erfindungsgemäß ist die äußere Beschichtung derart ausgestaltet, daß sie in dem Kern ein permanentes Magnetfeld erzeugt.

Entsprechend einem weiteren vorteilhaften Aspekt der Erfindung umfaßt der Polarisator eine polarisationserhaltende oder polarisationsdrehende Glasfaser, wobei die Fasern des Polarisators und des Polarisationsdrehers einstückig als verspleißte, durchgehende, optische Glasfaser ausgebildet sind.

Weitere Vorteile der Erfindung ergeben sich aus der folgenden Beschreibung im Zusammenhang mit den beiliegenden Zeichnungen, in denen zeigt:

Fig. 1 den schematischen Aufbau eines bekannten "Bulk"-Isolators;

Fig. 2 die wesentlichen Elemente eines erfindungsgemäßen optischen Isolators und

Fig. 3 den erfindungsgemäßen Lichtwellenleiter im Querschnitt.

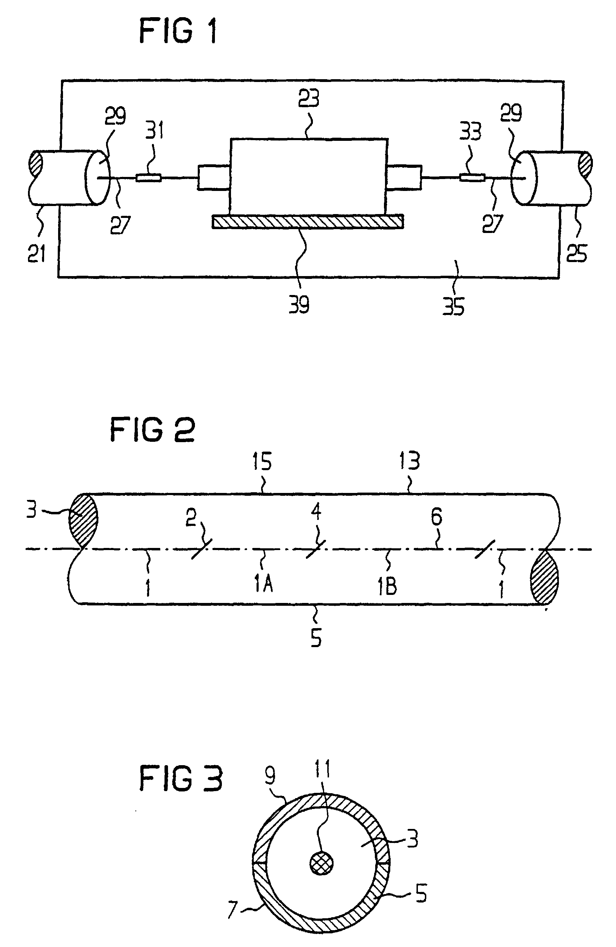

Zum besseren Verständnis der Erfindung wird zunächst unter Bezug auf Fig. 1 ein herkömmlicher optischer Isolator beschrieben. Über ein einen Lichtwellenleiter 27 (Glasfaser, Glasfaserader) enthaltendes Glasfaserkabel 21 gelangt ein Lichtsignal in den optischen Isolator 23 und über einen weiteren Lichtwellenleiter 27 in ein weiteres Glasfaserkabel 25. Die Glasfasern 21 und 27 bestehen jeweils aus einem Kern (Brechungsindex $n_K$) und einem Mantel (Cladding: Brechungsindex $n_M < n_K$).

Der Isolator besteht aus einem Polarisator und einem Polarisationsdreher, wobei man das einfallende Licht über eine Steckverbindung oder einen Spleiß 31 in den Polarisator einkoppelt. Der Polarisationsdreher bewirkt eine Drehung der Polarisationsrichtung des einfallenden Signallichts um 45°. Das in der Polarisationsrichtung gedrehte Licht verläßt den Isolator über eine weitere Steckverbindung oder einen Spleiß 33.

Zum Schutz des Isolators ist ein Gehäuse 35 vorgesehen, das die Steckverbindungen/Spleiße 31/33, den Polarisator und die Polarisationsdreher enthält.

Die Drehung der Polarisationsrichtung durch den Polarisationsdreher wird mittels des elektrooptischen Effekts erzielt. Hierfür wird ein Magnetfeld an einen geeigneten Kristall angelegt.

Das Ausmaß der Drehung (Drehwinkel Φ der Polarisationsebene) berechnet sich zu:

$$\Phi = R \cdot 1 \cdot H,$$

wobei l die Länge, H die magnetische Feldstärke und R die material- und frequenzabhängige Verdet'sche-Konstante bezeichnet.

Dementsprechend enthält die in Fig. 1 gezeigte Vorrichtung ein ein permanentes Magnetfeld erzeugendes Mittel 39, das in den auf einer Befestigungsplatte 39 sitzenden Isolator 23 integriert ist.

Die in Fig. 1 gezeigte Vorrichtung hat den Nachteil, daß sie nicht im Kabel integriert ist, sondern daß das Gehäuse über das Kabel hinausragt. Dies erschwert eine Verlegung des Kabels auf größeren Strecken, etwa bei Überseekabeln und ähnlichen.

Fig. 2 zeigt eine Skizze eines erfindungsgemäßen Isolators. Erfindungsgemäß ist der Isolator als faserförmiges Element in das Kabel 13 integriert. Das Kabel 13 weist zwei Lichtwellenleiter 1 auf, die über den aus einem Polarisator-Lichtwellenleiter 1A und einem Polarisationsdreher-Lichtwellenleiter 1B bestehenden optischen Faserisolator miteinander verbunden sind. Mit 2,4,6 sind die jeweiligen Spleißverbindungen zwischen den jeweiligen Elementen bezeichnet. Damit sind der Polarisator und der Polarisationsdreher in Wellenleiterform in das Kabel 13 integriert. Als Polarisator wird eine polarisierende Faser 1A (die einfallende Strahlung ist nicht polarisiert) oder eine polarisationserhaltende Faser 1A (die einfallende Strahlung ist bereits linear polarisiert) verwendet. Als Polarisationsdreher wird eine in Fig. 3 im Querschnitt dargestellte Spezialglasfaser 1B eingesetzt. Die Länge der als Polarisator dienenden Glasfaser 1A kann relativ kurz sein (unter 5 m). Die Länge der polarisationsdrehenden Glasfaser 1B hängt hingegen von der Wellenlänge der verwendeten Strahlung, der Verdet'schen Konstante R des Kernmaterials und der Stärke H des Magnetfelds ab. Durch die obengenannte Bauweise sind auch die durch den optischen Isolator hervorgerufenen Dämpfungen gering.

Fig. 3 zeigt den schematischen Aufbau des polarisationsdrehenden Wellenleiters 1B. Dieser besteht aus einem Glasfaserkern 11 mit einer positiven Verdet'schen Konstanten R. Der Glasfaserkern 11 ist von einem Mantel 3 (Cladding) umgeben. Auf den Mantel 3 ist eine Beschichtung 5 aufgebracht, welche aus einem magnetischen oder magnetisierbaren Material besteht. Die Beschichtung 5 erzeugt das magnetische Feld am Ort des Glasfaserkerns 11. Vorzugsweise ist hierfür die magnetische Beschichtung in zwei Halbschalen unterteilt, die jeweils den magnetischen Nordpol bzw. Südpol bilden.

Entsprechend einer bevorzugten Ausführungsform wird der Glasfaserkern 11 mit einem Material dotiert, welches eine ausreichend große Verdet'sche Konstante R besitzt. Ein Beispiel hierfür ist im Bereich einer Wellenlänge $\lambda > 1.500$ nm das Material YIG (Yttrium-Iron-Garnet). Dieses besitzt einen Drehwinkel von 175 °/cm bei $10^4$ Gauss (1 T).

Aufgrund der sehr großen Wechselwirkungslängen von einigen 10 m reicht es aus, daß die Beschichtung 5 ein relativ schwaches Magnetfeld erzeugt. Unter den obengenannten Voraussetzungen und einer Wechselwirkungslänge von 1 = 10 m ist für eine Drehung um 45° ein Magnetfeld von 2,6 Gauss (260 µT) ausreichend.

$$H = \frac{\Phi}{R * l}$$

$$H = \frac{45°}{175°/\text{cm} * 10\text{m}} * 10^4 \ G$$

$$H = 2{,}6 \ G$$

Als Beschichtung 5 kommen insbesondere die aus der Daten- und Tonaufzeichnungstechnik bekannten magnetischen oder magnetisierbaren Materialien/ Dünnschichten in Betracht.

Neben der Kleinheit im Durchmesser des so gebauten Polarisationsdrehers, der die Integration in das Kabel erlaubt, ist die Möglichkeit des einfachen Verbindens durch Fusionsspleißen gegeben, was die Reflektion an der Verbindungsstelle erheblich verringern kann. In Kombination mit einer polarisierenden oder polarisationserhaltenden Glasfaser als Polarisator ist es somit möglich, einen optischen Isolator auszubilden, der vollständig in dem Kabel integriert ist.

Obwohl vorangehend die Erfindung unter Bezugnahme auf eine spezielle Ausführungsform beschrieben wurde, ist die Erfindung hierauf nicht beschränkt. Beispielsweise kann anstelle der Dotierung mit YIG eine Dotierung mit anderen Materialien mit einer geeigneten Verdet'schen Konstanten erfolgen. Als Materialien für die magnetische Beschichtung bieten sich solche Materialien an, die beispielsweise für die magnetische Beschichtung von Datenträgern verwendet werden. Es ist möglich, die Magnetisierung der Beschichtung erst nach dem Aufbringen der Beschichtung auf dem Mantel 3 des Glasfaserkerns 11 zu bewirken.

**Patentansprüche**

1.    Lichtwellenleiter mit einem Faserkern (11), einem Fasermantel (3) und einer äußeren Beschichtung (5),
**dadurch gekennzeichnet, dass**
die äußere Beschichtung (5) aus einem magnetische Eigenschaften aufweisenden oder magnetisierbaren Material besteht so dass mittels dieser Beschichtung (5) ein Magnetfeld erzeugbar ist und dass die Länge des Lichtwellenleiters derart groß ist, dass der Faraday-Effekt des Faserkerns eine wesentliche Polarisationsdrehung bewirken kann.

2.    Lichtwellenleiter nach Anspruch 1, **dadurch gekennzeichnet, dass** die äußere Beschichtung (5) in zwei Halbschalen (7, 9) unterteilt ist, deren magnetische Ausrichtung zueinander entgegengesetzt ist.

3.    Lichtwellenleiter nach Anspruch 1, **dadurch gekennzeichnet, dass** der Kern (11) mit YIG-Material dotiert ist.

4.    Lichtwellenleiter nach Anspruch 1, **dadurch gekennzeichnet, dass** der Lichtwellenleiter ein Einzel-Wellenleiter ist.

5.    Optischer Isolator mit einem Polarisator (15), einem Polarisationsdreher (13) einem Lichtwellenleiter nach einem der Ansprüche 1-4.

6.    Optischer Isolator nach Anspruch 5, **dadurch gekennzeichnet, dass** der Polarisator (15) eine polarisationserhaltende oder polarisationsdrehende Glasfaser umfaßt, wobei die Fasern des Polarisators (15) und des Polarisationsdrehers (13) einstückig als verspleißte, durchgehende optische Glasfaser ausgebildet sind.

**Revendications**

1.    Guide d'ondes optiques, avec une âme de fibre (11), une enveloppe de fibre (3) et un revêtement extérieur (5),
**caractérisé en ce que** le revêtement extérieur (5) est constitué d'un matériau magnétisable ou présentant des propriétés magnétiques, de sorte qu'on peut produire un champ magnétique au moyen de ce revêtement (5), et **en ce que** la longueur du guide d'ondes optiques est telle que l'effet de Faraday de l'âme de fibre peut produire une rotation de polarisation notable.

2.    Guide d'ondes optiques selon la revendication 1, **caractérisé en ce que** le revêtement extérieur (5) est divisé en deux demi-coques (7, 9) dont les orientations magnétiques sont mutuellement opposées.

3.    Guide d'ondes optiques selon la revendication 1, **caractérisé en ce que** l'âme (11) est dopée de grenat d'yttrium et de fer (YIG).

4.    Guide d'ondes optiques selon la revendication 1, **caractérisé en ce que** le guide d'ondes optiques est un guide d'ondes individuel.

5.    Isolateur optique avec un polariseur (15), un rotateur de polarisation (13) et un guide d'ondes optiques selon l'une quelconque des revendications 1à 4.

6.    Isolateur optique selon la revendication 5, **caractérisé en ce que** le polariseur (15) comprend une fibre de verre maintenant la polarisation ou faisant tourner la polarisation, les fibres du polariseur (15) et du rotateur de polarisation (13) étant réalisées d'un seul tenant sous la forme de fibres de verre optiques continues épissées.

**Claims**

1.    An optical waveguide comprising a fiber core (11), a fiber cladding (3) and an outer coating (5), **characterized in that** the outer coating (5) consists of a material having magnetic properties or a magnetizable material, such that by means of this outer coating (5) a magnetic field can be generated, and that the length of the light waveguide is such that the Faraday effect of the fiber core can cause a substantial polarization rotation.

2. The optical waveguide according to claim 1, **characterized in that** the outer coating (5) is subdivided into two half-shells (7, 9) whose magnetic orientations are mutually opposed.

3. The optical waveguide according to claim 1, **characterized in that** the core (11) is doped with YIG material.

4. The optical waveguide according to claim 1, **characterized in that** the optical waveguide is a single waveguide.

5. An optical insulator with a polarizer (15), a polarization rotor (13) and an optical waveguide according to any one of the claims 1 to 4.

6. The optical insulator according to claim 5, **characterized in that** the polarizer (15) comprises a polarization-preserving or polarization-rotating glass fiber, wherein the fibers of the polarizer (15) and of the polarization rotator (13) are constructed in one piece as a spliced, continuous optical glass fiber.

## FIG 1

## FIG 2

## FIG 3